# EUROPÄISCHE PATENTSCHRIFT

(11) **EP 4 021 818 B1**
(45) Veröffentlichungstag und Bekanntmachung des Hinweises auf die Patenterteilung: **28.10.2026**
(21) Anmeldenummer: 20764355.2
(22) Anmeldetag: 27.08.2020
(51) Int. Cl.: B65D 43/10

(54) **DECKEL FÜR EINEN BECHER**
LID FOR A CUP
COUVERCLE POUR UN GOBELET

(30) Priorität: 30.08.2019 DE 202019104776 U
(43) Veröffentlichungstag der Anmeldung: 06.07.2022
(73) Patentinhaber: SEDA INTERNATIONAL PACKAGING GROUP SPA, 80022 Arzano Napoli (IT)
(72) Erfinder: D'AMATO, Gianfranco, 80022 Arzano Napoli (IT)
(74) Vertreter: Grünecker Patent- und Rechtsanwälte PartG mbB
(86) Internationale Anmeldenummer: PCT/EP2020/073974
(87) Internationale Veröffentlichungsnummer: WO 2021/037980

(56) Entgegenhaltungen:
- EP-A1- 3 000 745
- WO-A1-2012/082067
- US-A1- 2010 176 130

## Beschreibung

Die Erfindung betrifft einen Deckel für einen Becher für Getränke. Ein solcher Becher ist beispielweise aus Papier oder Pappe hergestellt und weist auf der Innenseite eine flüssigkeitsdichte Beschichtung auf. Solche Becher sind recyclebar oder kompostierbar und damit ökologisch besser als Becher aus Kunststoffmaterial. Ein solcher Becher dient zum Verzehr von kalten oder heißen Getränken und wird in der Regel an seinem oberen offenen Ende durch einen entsprechenden Deckel verschlossen. Dieser Deckel muss gewisse Anforderungen hinsichtlich Dichtigkeit und festem Sitz auf einem oberen Becherrand erfüllen.

Ein entsprechender Becher mit Deckel ist beispielsweise in der EP 1 975 085 oder der EP 1 787 916 beschrieben. Deckel für solche Becher sind beispielsweise aus der EP 1 968 861 oder der EP 3 068 706 bekannt. Ein weiterer Deckel ist in der DE 20 2005 018 987 beschrieben. EP 300 745 A1 offenbart einen Deckel aus Papier für einen Getränkebecher. Ein weiterer Papierdeckel für Becher und Schüsseln ist aus der US 2010/176130 A1 bekannt. In WO 2012/082067 A1 wird ein stapelbarer Kartondeckel beschrieben.

Während allerdings die Becher bereits aus Papier oder Pappe mit entsprechender Beschichtung hergestellt werden, wurden bislang für die verschiedenen Deckel Kunststoffmaterialien, wie beispielsweise Polystyrol, verwendet. Diese sind zwar einfach herzustellen und zu handhaben und erfüllen die Anforderungen hinsichtlich Dichtigkeit und festem Sitz auf dem Behälter, sind jedoch im Hinblick auf das verwendete Material ökologisch bedenklicher als der Becher.

Der vorliegenden Anmeldung liegt die Aufgabe zugrunde, einen Deckel für einen Becher für Getränke dahingehend zu verbessern, dass dieser zum größten Teil aus Papier hergestellt ist, einen einfachen Aufbau aufweist und entsprechende Anforderungen an Dichtigkeit und festen Sitz auf einem oberen Ende des Bechers erfüllt.

Die Neuerung zeichnet sich insbesondere dadurch aus, dass der Deckel ein auf einen oberen Becherrand aufsetzbares Deckelunterteil und eine im Wesentlichen kreisförmige Deckelscheibe aufweist, wobei Deckelunterteil und Deckelscheibe aus Papier hergestellt und entlang einer nach unten in Richtung Becher weisenden Randnut und eines in im Wesentlichen entgegengesetzter Richtung nach oben weisenden Randflansches, der in die Randnut eingesteckt ist, flüssigkeitsdicht verbunden sind. Der Deckel ist also im Wesentlichen zweiteilig aus Deckelunterteil und Deckelscheibe aufgebaut, die flüssigkeitsdicht miteinander verbunden sind. Der gleiche Aufbau lässt sich für Deckel verwenden, die auf Becher unterschiedlichen Durchmessers aufgesetzt werden, wobei nur der Radius von Deckelunterteil und Deckelscheibe an den entsprechenden Durchmesser einer oberen Öffnung des Bechers angepasst wird. Deckelunterteil und Deckelscheibe sind jeweils aus Papier, Pappe oder einem anderen Papiermaterial hergestellt. Sie sind einfach zusammensetzbar, so dass eine große Anzahl von Deckeln in kurzer Zeit maschinell aus Einzelteilen hergestellt und zusammengesetzt werden kann.

Je nach Ausführungsbeispiel ist die Randnut durch einen oberen Rand des Deckelunterteils und der Randflansch durch einen nach oben umgefalteten Deckelscheibenrand gebildet bzw. die Randnut durch einen nach unten offenen Randring der Deckelscheibe und der Randflansch durch einen oberen Endabschnitt des Deckelunterteils gebildet. In beiden Fällen erfolgt ein Einsetzen des Randflansches in die Randnut und entsprechend ein flüssigkeitsdichtes Verbinden miteinander. Ist die Randnut durch einen oberen Rand des Deckelunterteils gebildet, so übergreift diese Randnut den entsprechenden Deckelscheibenrand und erstreckt sich im Wesentlichen bis auf eine Oberseite des Deckelunterteils. Erfolgt ein Austritt von Flüssigkeit auf die Deckeloberseite, so kann diese in Kontakt mit dem Deckelunterteil und insbesondere deren Randnut geraten. Wird die Randnut durch einen nach unten offenen Randring der Deckelscheibe gebildet, so ist im Wesentlichen die gesamte Oberfläche der Deckelscheibe durch diesen Randring begrenzt, so dass Flüssigkeit auf der Deckelscheibe nur mit Material der Deckelscheibe in Kontakt gerät.

Im einfachsten Fall ist die Randnut im Wesentlichen umgekehrt U-förmig ausgebildet. Die Randnut kann entsprechende Rundungen einer U-Form aufweisen, kann aber auch die U-Schenkel über Kanten mit einem U-Steg verbinden.

Um ein Einstecken des Randflansches in die Randnut zu vereinfachen, kann eine Tiefe der Randnut im Wesentlichen gleich einer Höhe oder Länge des Randflansches sein. Dadurch kann ein einfaches Einstecken des Randflansches in die Randnut bis zum Berühren eines freien Endes des Randflansches mit einem Boden der Randnut erfolgen. In diesem Zusammenhang kann ein Verkleben nicht nur entlang flacher Seiten des Randflansches, sondern auch an seinem freien Ende mit einem Boden der Randnut erfolgen.

Insbesondere das Deckelunterteil gewährleistet ein sicheres Aufsetzen des Deckels auf einen Becher. Um das Deckelunterteil ggf. in dieser Hinsicht anzupassen und unterschiedlich feste Sitze des Deckels auf dem Becher zu ermöglichen, ist das Deckelunterteil aus zwei, drei oder mehr Papierschichten gebildet. Diese sind miteinander in an sich bekannter Weise verbunden und können zu einem Zuschnitt für das Deckelunterteil geschnitten werden. Das Deckelunterteil ist aus einer länglichen Röhre durch Zuschneiden der Röhre in scheibenähnlicher Weise hergestellt. Anschließend kann noch ein Verformen des Deckelunterteils hinsichtlich des festen Sitzes auf einem oberen Rand des Bechers erfolgen. Die Papierschichten sind spiralförmig gewickelt.

Für die Deckelscheibe ist es in der Regel ausreichend, wenn diese aus wenigstens einer Papierschicht gebildet ist. Die Deckelscheibe schließt den Deckel nach oben ab, dient allerdings bis auf die Verbindung mit dem Deckelunterteil nur in geringem Maße zur Stabilität des Deckels bzw. zur Herstellung eines festen Sitzes auf dem Becher. Allerdings kann es die Deckelscheibe sein, die vorwiegend in Kontakt mit der im Becher enthaltenen Flüssigkeit gerät, so dass es in diesem Zusammenhang von Vorteil sein kann, wenn die Deckelscheibe zumindest auf ihrer Unterseite eine flüssigkeitsdichte Kunststoffbeschichtung aufweist. Eine solche Kunststoffbeschichtung kann eine sehr dünne Schicht aus Polyethylen, Lack oder dergleichen sein, wobei auch biologisch abbaubare Kunststoffe verwendet werden können, die beispielsweise auch als wässrige Lösung oder als Schicht auf die Deckelunterseite auftragbar sind. Bei Verwendung einer wässrigen Lösung kann diese einen PET (Polyethylenterephthalat)- Anteil aufweisen. Dieser ist allerdings gegenüber einer reinen Kunststoffbeschichtung nur zu einem geringen Prozentsatz in der wässrigen Lösung enthalten. Weiterhin kann alternativ oder zusätzlich eine entsprechende Beschichtung auf einer Oberseite der Deckelscheibe oder auf einer Außenseite des Deckelunterteils angeordnet sein.

Um eine flüssigkeitsdichte Verbindung zwischen Randnut und Randflansch in einfacher Weise herzustellen, können diese miteinander verklebt werden. Ein solches Verkleben kann beispielsweise durch Verwenden eines Klebstoffes erfolgen. Ebenfalls denkbar ist ein Verkleben durch die Kunststoffbeschichtung auf der Deckelunter- bzw. -oberseite, die beispielsweise bei einem Heißversiegeln etwas angeschmolzen wird und nach dem Wiederaushärten die Verbindung zwischen Randnut und Randflansch in flüssigkeitsdichter Weise herstellt. Wie bereits dargelegt, kann die Kunststoffbeschichtung biologisch abbaubar oder zumindest vom Deckel trennbar sein. Dies gilt analog auch für zusätzlich verwendete Klebemittel.

Insbesondere als vorteilhaft kann angesehen werden, wenn der Deckel nicht nur zum Verschließen des Bechers verwendet wird, sondern auch eine Entnahme des Getränks ohne Lösen des Deckels vom Becher möglich ist. Dazu sind mehrere Möglichkeiten denkbar. Ein Beispiel ist das Ausbilden einer Trinkhalmeinsteckstelle in der Deckelscheibe, die insbesondere durch Einstecken eines Trinkhalms geöffnet werden kann. Der Benutzer wird die Trinkhalmeinsteckstelle durch Einstecken des Trinkhalms öffnen und den Trinkhalm entsprechend durch die Trickhalmeinsteckstelle hindurch in den Becher einschieben, um das Getränk aus dem Becher entnehmen zu können. Eine solche Trinkhalmeinsteckstelle kann im Wesentlichen an beliebiger Stelle in der Deckelscheibe ausgebildet sein, wobei auch eine im Wesentlichen mittige Anordnung möglich ist. Um ein Einstecken des Trinkhalms ohne zusätzliche Hilfsmittel zu ermöglichen oder eine Spitze am Trinkhalm zum Herstellen einer Öffnung in der Deckelscheibe zu vermeiden, kann die Trinkhalmeinsteckstelle durch eine oder mehrere zumindest teilweise die Deckelscheibe durchsetzende Schnittlinien gebildet sein. Solche Schnittlinien können beispielsweise X-förmig angeordnet sein, so dass an dem Schnittpunkt der X-Schenkel der Trinkhalm aufgesetzt und dann an dieser Stelle durch die Deckelscheibe eingedrückt werden kann. Es ist ebenfalls denkbar, dass solche Schnittlinien die Deckelscheibe vollständig durchsetzen.

Die Deckelscheibe ist in der Regel im Abstand zu einer Flüssigkeit im Becher angeordnet, so dass auch bei einem Durchsetzen der Deckelscheibe mittels der Schnittlinien keine Undichtigkeit auftreten muss. Sind sie Schnittlinien allerdings nur teilweise durchsetzend, so ist beispielsweise die Kunststoffbeschichtung intakt, so dass in sicherer Weise ein Ausdringen von Flüssigkeit vermieden werden kann.

Anstelle der X-förmigen Anordnung sind ebenfalls andere Formen von Schnittlinien denkbar.

Um dem Benutzer weitere Möglichkeiten zur Entnahme des Getränkes zu ermöglichen, kann zusätzlich oder alternativ zur Trinkhalmeinsteckstelle eine durch den Benutzer zu öffnende Austrinkstelle in der Deckelscheibe ausgebildet sein. Eine solche Austrinkstelle kann zum direkten Verzehr des Getränks aus dem Becher dienen, d. h. ohne Verwendung eines Trinkhalmes. Eine solche Austrittsstelle ist durch einen Deckelscheibenabschnitt bestimmt, der beispielsweise auch durch eine oder mehrere zumindest teilweise die Deckelscheibe durchsetzende Schnittlinien gebildet ist. Außerdem kann der Austrinkstelle eine Handhabe zum Eindrücken oder Abheben des entsprechenden Deckelscheibenabschnitts zugeordnet sein. Eine solche Handhabe kann beispielsweise ähnlich zu einer Handhabe bei Getränkedosen aus Aluminium ausgebildet sein, wobei allerdings die Handhabe in diesem Fall aus Papier gebildet ist. Weiterhin besteht natürlich die Möglichkeit, durch Verwenden der Handhabe nicht nur den entsprechenden Deckelscheibenabschnitt im Wesentlichen ins Innere des Bechers zu drücken, sondern zumindest teilweise oder auch vollständig vom Deckel zu entfernen.

Um die Dichtigkeit des Deckels zu verbessern und gleichzeitig eine entsprechende Aufsetzstellung des Deckels auf dem Becher in einfacher Weise festzulegen, kann es sich weiterhin als günstig erweisen, wenn im Wesentlichen am unteren Ende von Randnut oder Randflansch des Deckelunterteils eine im Wesentlichen nach innen geneigte Auflagekante gebildet ist. Diese Auflagekante kann auf einem oberen freien Ende eines Randes des Bechers anliegen, so dass sowohl die Aufsetzstellung des Deckels dadurch bestimmbar ist, als auch eine entsprechende Dichtigkeit durch diesen Kontakt zwischen zumindest Deckelunterteil und Becher verbessert werden kann.

Es wurde bereits darauf hingewiesen, dass mehrere Papierschichten für zumindest das Deckelunterteil verwendbar sind. Dabei kann es sich weiterhin als vorteilhaft erweisen, wenn die Dicken solcher Papierschichten unterschiedlich sind. Bei bestimmten Ausführungsbeispielen der Neuerung kann beispielsweise die Dicke der Deckelscheibe 0,2 - 0,8 mm und des Deckelunterteils 0,6 - 1,2 mm betragen.

Allerdings sind diese Werte nicht festgelegt, da sie sich im Hinblick auf Anforderungen an den Deckel oder je nach Verwendung für Kalt- oder Heißgetränke auch von den genannten Werten unterscheiden können.

Insgesamt ergibt sich auf diese Weise ein Deckel aus einem ökologisch unbedenklichen Material, der einfach herzustellen und zu handhaben ist, und gleichzeitig alle Anforderungen hinsichtlich Dichtigkeit und festem Sitz auf einem Becher erfüllt. Der Deckel sitzt fest auf dem Behälter, ist flüssigkeitsdicht und erlaubt gleichzeitig verschiedene Möglichkeiten zur Entnahme eines Getränkes aus dem Behälter.

Es besteht ebenfalls die Möglichkeit, den Deckel insgesamt zu entfernen und das Getränk direkt aus dem Becher zu trinken. Der Deckel ist außerdem für unterschiedliche Größen von Bechern verwendbar, wobei nur der Durchmesser von Deckelscheibe und Deckelunterteil entsprechend angepasst werden. Die übrigen Merkmale des Deckels bleiben unverändert.

Ein nur einmal verwendbarer Plastikdeckel wird durch den beschriebenen Deckel hinsichtlich aller Anforderungen ersetzt.

Bei einem weiteren Ausführungsbeispiel des Deckels ist es denkbar, dass zusätzlich oder alternativ zur Trinkhalm-Einsteckstelle eine weitere Austrinkstelle vorgesehen ist. Diese kann durch einen die Austrinkstelle verschließenden Deckelscheibenabschnitt im Wesentlichen flüssigkeitsdicht bedeckt sein, wobei dieser Deckelscheibenabschnitt von einer zumindest teilweise umlaufenden Aufreißlinie und einer Endfaltlinie begrenzt ist. Die Aufreißlinie kann durch eine entsprechende Perforierung oder eine teilweise in die Deckelscheibe geschnittene Schnittlinie gebildet sein. Entlang der Aufreißlinie ist der Deckelscheibenabschnitt von der übrigen Deckelscheibe trennbar und um die Endfaltlinie umfaltbar. Auf diese Weise wird die Austrinkstelle geöffnet.

Bei einem Ausführungsbeispiel ist es denkbar, dass die Aufreißlinie einen vorderen der Randnut zuweisenden Linienabschnitt und zwei sich von diesem vorderen Linienabschnitt in Richtung Faltlinie verlaufende Seitenlinienabschnitte aufweist.

In diesem Zusammenhang besteht weiterhin die Möglichkeit, dass der vordere Linienabschnitt konvex gekrümmt ist und sich die Seitenlinienabschnitte im Wesentlichen geradlinig erstrecken.

Um bei geöffnetem Deckelscheibenabschnitt eine über die Deckelscheibe hervorstehende Höhe des Deckelscheibenabschnitts in seinem geöffneten Zustand zu begrenzen und gleichzeitig beim Aufreißen des Deckelscheibenabschnitts zumindest entlang der Seitenlinienabschnitte eine verstärkte Handhabe zu haben, kann der Deckelscheibenabschnitt eine weitere, mittlere Faltlinie aufweisen, die sich beispielsweise zwischen Enden der Seitenlinienabschnitte erstreckt, welche Enden mit dem vorderen Linienabschnitt verbunden sind.

Dabei besteht die Möglichkeit, dass diese mittlere Faltlinie im Wesentlichen parallel zur Endfaltlinie verläuft. Es ist allerdings auch denkbar, dass anstelle eines geradlinigen Verlaufs dieser beiden Faltlinien und deren im Wesentlichen paralleler Anordnung ein Winkel zwischen den Richtungen der Faltlinien vorgesehen ist oder die Faltlinien zumindest teilweise gekrümmt oder wellenförmig verlaufen.

Weiterhin besteht die Möglichkeit, dass die mittlere Faltlinie länger als die Endfaltlinie ist. Ebenfalls denkbar ist eine mittlere Faltlinie mit gleicher Länge oder kürzer als die Endfaltlinie.

Der vordere Linienabschnitt und die mittlere Faltlinie begrenzen einen Eindrückabschnitt des Deckelscheibenabschnitts. Die mittlere Faltlinie, die Seitenlinienabschnitte und die Endfaltlinie begrenzen einen Hochklappabschnitt des Deckelscheibenabschnitts. Ein Öffnen des Deckelscheibenabschnitts erfolgt dann i.d.R. in der Weise, dass zuerst der Eindrückabschnitt zum Lösen entlang des vorderen Linienabschnitts in das Becherinnere eingedrückt und dabei um die mittlere Faltlinie nach unten abgeschwenkt wird, anschließend der Hochklappabschnitt mittels des eingedrückten und nach innen umgeklappten Eindrückabschnitts angehoben wird, wobei eine entsprechende Trennung von der übrigen Deckelscheibe entlang der Seitenlinienabschnitte erfolgt. Das Hochklappen des Hochklappabschnitts erfolgt über die Endfaltlinie. In der Öffnungsstellung des Deckelscheibenabschnitts sind dann sowohl Eindrückabschnitt als auch Hochklappabschnitt oberhalb der übrigen Deckelscheibe angeordnet, so dass die Austrinkstelle gut benutzbar ist. Es erfolgt somit erfindungsgemäß ein doppeltes Umklappen des Deckelscheibenabschnitts um die mittlere Faltlinie und die Endfaltlinie und ein Trennen des Deckelscheibenabschnitts entlang der Seitenlinienabschnitte und des vorderen Linienabschnitts.

Im Folgenden werden vorteilhafte Ausführungsbeispiele des Deckels anhand der in der Zeichnung beigefügten Figuren näher beschrieben. Dabei zeigen
Fig. 1 eine perspektivische Draufsicht auf einen Becher mit Deckel;
Fig. 2 einen Schnitt entlang eines Durchmessers des Deckels nach Fig. 1 für ein erstes Ausführungsbeispiel;
Fig. 3 einen Schnitt analog zu Fig. 2 für ein weiteres Ausführungsbeispiel, und
Fig. 4 eine perspektivische Draufsicht auf ein weiteres Ausführungsbeispiel eines erfindungsgemäßen Deckels.

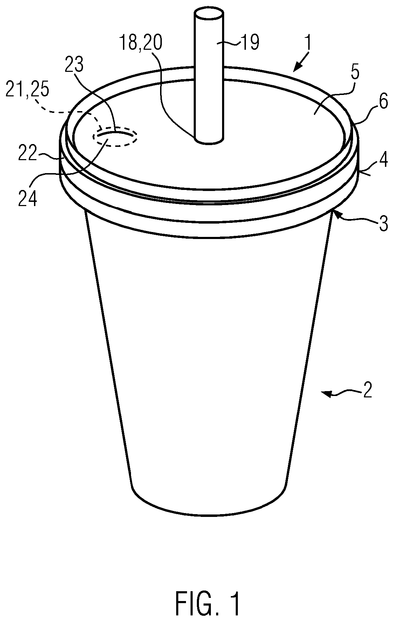

Fig. 1 zeigt eine perspektivische Ansicht von schräg oben auf einen Becher 2 mit einem Deckel 1. Der Becher 2 hat eine im Wesentlichen kegelstumpfförmige Form mit einem oberen Becherrand 3, auf den der Deckel 1 aufgesetzt und dort im Wesentlichen flüssigkeitsdicht angeordnet ist. Der Deckel 1 hat eine kreisförmige Form und weist ein Deckelunterteil 4 und eine Deckelscheibe 5 auf. Das Deckelunterteil 4 ist im Wesentlichen ringförmig und die Deckelscheibe 5 im Wesentlichen kreisförmig. Je nach Durchmesser des Bechers 2 an seinem oberen Becherrand 3 können die Durchmesser von Deckelscheibe 5 und Deckelunterteil 4 ausgewählt sein.

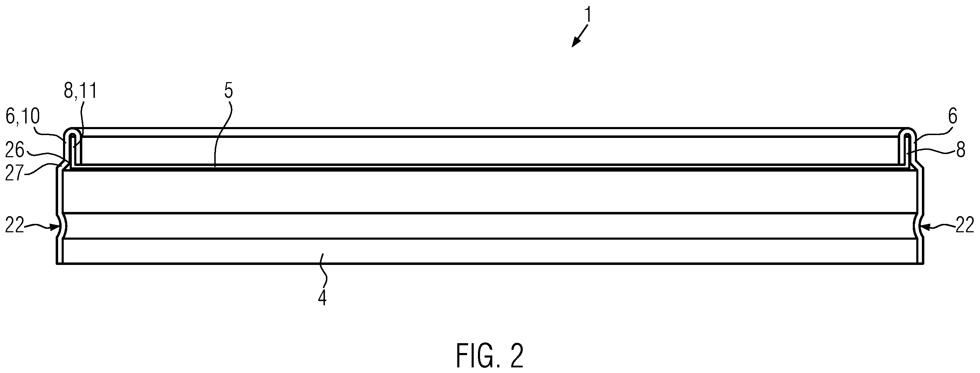

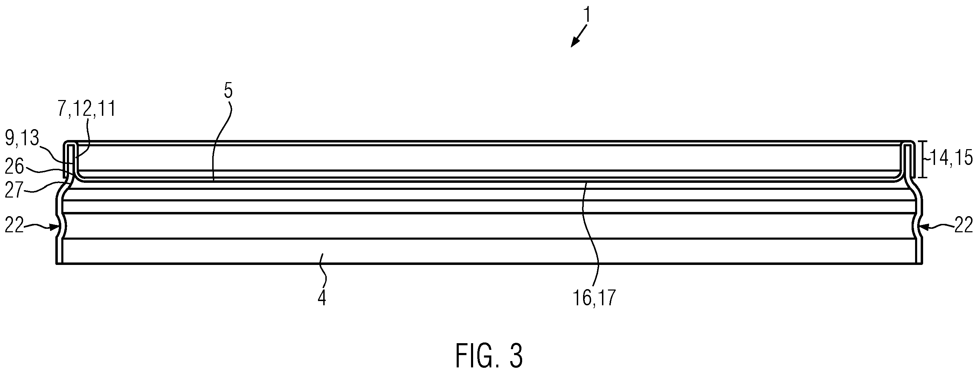

Das Deckelunterteil 4 weist eine Struktur in Höhenrichtung auf, die beispielsweise eine nach innen vorstehende Rastwulst 22 aufweist, siehe auch Fig. 2 und 3, welche beispielsweise bei auf den Becher 2 aufgesetztem Deckel 1 einen in der Regel nach außen umgerollten Becherrand untergreift.

Die Oberseite der Deckelscheibe 5 ist im Wesentlichen eben und weist bei dem dargestellten Ausführungsbeispiel eine Trinkhalmeinsteckstelle 18 auf, die durch wenigstens eine Schnittlinie 20 gebildet ist. Es sind ebenfalls mehrere Schnittlinien 20 denkbar, wobei diese beispielsweise in X-Form angeordnet sind und ein Trinkhalm 19 mit seinem unteren Ende auf einen entsprechenden Schnittpunkt der Schnittlinien 20 aufgesetzt und dann durch die Deckelscheibe 5 ins Innere des Bechers 2 vorgeschoben wird.

Weiterhin oder auch alternativ zur Trinkhalmeinsteckstelle 18 kann die Deckelscheibe 5 eine Austrinkstelle 21 aufweisen, die beispielweise als Deckelscheibenabschnitt 24 ausgebildet ist, der von einer Schnittlinie 25 umrandet ist. Die Form des Deckelscheibenabschnitts 24 kann kreisförmig oder auch in anderer Weise ausgebildet sein, beispielsweise tropfenförmig in Richtung Randnut 6. Um den Deckelscheibenabschnitt 24 ins Innere des Bechers zu drücken oder zumindest teilweise von der Deckelscheibe 5 anzuheben, kann eine Handhabe 23 an dem Deckelscheibenabschnitt 24 angeordnet sein.

Es ist ebenfalls möglich, dass die Deckelscheibe 5 weder Trinkhalmeinsteckstelle 18 noch Austrinkstelle 21 aufweist, so dass beispielsweise kein Trinkhalm 19 oder ohne zusätzliche Hilfsmittel zum Durchstoßen der Deckelscheibe verwendet werden kann.

Bei dem Ausführungsbeispiel des Deckels 1 nach Fig. 1 ist eine Randnut 6 durch einen oberen Rand 10, siehe auch Fig. 2, des Deckelunterteils 4 gebildet. Die Randnut 6 weist eine im Wesentlichen umgekehrte U-Form auf und in die Randnut 6 ist ein von der Deckelscheibe 5 gebildeter Randflansch 8 eingesetzt. Der Randflansch 8 wird durch einen in Fig. 2 nach oben weisenden Deckelscheibenrand 11 gebildet. Dieser ist im Wesentlichen vollständig in die Randnut 6 eingesetzt. Randnut 6 und Randflansch 8 bzw. Deckelscheibenrand 11 sind miteinander flüssigkeitsdicht verbunden.

An einem unteren Ende 26 der Randnut 6 weist das Deckelunterteil 4 eine schräg nach innen verlaufende Auflagekante 27 auf. Diese dient beispielsweise zum Anlegen von oben und seitlich an einen oberen Becherrand 3, der in Fig. 2 nicht dargestellt ist.

Der Deckelscheibenrand 11 verläuft im Wesentlichen senkrecht zur übrigen Deckelscheibe 5, die sich zwischen der umlaufenden Randnut 6 des Deckelunterteils 4 erstreckt.

Eine flüssigkeitsdichte Verbindung zwischen Randnut und Randflansch kann bei allen Ausführungsbeispielen durch ein zusätzliches Klebemittel oder durch eine zumindest auf einer Deckelscheibenunterseite 16 bzw. Deckelscheibenoberseite aufgebrachte Kunststoffbeschichtung 17 erfolgen. Im letzten Fall erfolgt die Verbindung beispielsweise durch Heißsiegeln.

Es ist ebenfalls denkbar, dass die Kunststoffbeschichtung 17 nicht nur auf einer Unterseite 16 der Deckelscheibe 5, sondern alternativ oder zusätzlich auf deren Oberseite und ggf. auf einer Außenseite/Innenseite des Deckelunterreils aufgebracht ist.

Bei dem Ausführungsbeispiel nach Fig. 3 ist die Randnut 7 durch einen Randring 12 am Deckelscheibenrand 11 gebildet. Dieser weist ebenfalls eine im wesentlichen umgekehrte U-Form auf, in die von unten ein entsprechender Randflansch 9 des Deckelunterteils 4 eingesteckt ist, wobei der Randflansch 9 durch einen oberen Endabschnitt 13 des Deckelunterteils 4 gebildet ist. Auch bei dem Ausführungsbeispiel nach Fig. 3 ist eine Auflagekante 27 im Wesentlichen am unteren Ende 26 in diesem Fall des Randflansches 9 bzw. des oberen Endabschnitts 13 des Deckelunterteils 4 gebildet. Bevorzugt entspricht eine Tiefe 14 der Randnut 6, 7 einer Höhe oder Länge 15 des entsprechenden Randflansches 8,9.

Zur Vereinfachung ist in den Fig. 2 bzw. 3 eine Trinkhalmeinsteckstelle 18 bzw. eine Austrinkstelle 21 nicht dargestellt. Eine Trinkhalmeinsteckstelle 18 wird üblicherweise nicht bei Heißgetränken vorgesehen. Ebenso kann die Austrinkstelle 21 eine einfache Öffnung im Deckel sein.

Bei der Austrinkstelle 21 ist außerdem zu beachten, siehe Fig. 1, dass diese nicht beabstandet zur entsprechenden Randnut 6, 7 angeordnet sein muss, sondern sich auch bis zur und entlang der Randnut erstrecken kann.

Bei beiden Ausführungsbeispielen der Fig. 2 und 3 ist jeweils die Rastwulst 22 dargestellt, wobei sich zwischen dieser und dem unteren Ende 26 bei auf einen Becher 2 aufgesetztem Deckel 1 ein oberer Becherrand befindet. Die Rastwulst 22 untergreift dabei den entsprechenden oberen, beispielsweise nach außen umgerollten, Becherrand.

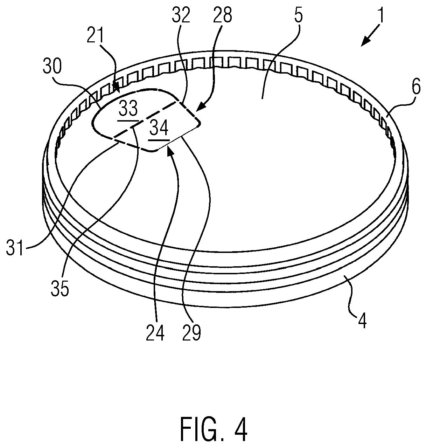

Fig. 4 zeigt eine Draufsicht auf ein weiteres Ausführungsbeispiel eines erfindungsgemäßen Deckels. Dieser weist einen Deckelscheibenabschnitt 24 auf, der eine Austrinkstelle 21 in der Deckelscheibe 5 verschließt. Der Deckelscheibenabschnitt weist einen der Randnut 4 bzw. 6 zuweisenden Eindrückabschnitt 33 und einen sich daran anschließenden Hochklappabschnitt 34 auf. Der Eindrückabschnitt 33 ist von einem vorderen Linienabschnitt 30 und einer mittleren Faltlinie 35 begrenzt. Der vordere Linienabschnitt setzt sich in zwei Seitenlinienabschnitten 31, 32 fort, die an einer Endfaltlinie 29 enden. Vorderer Linienabschnitt und Seitenlinienabschnitt sind aufreißbar oder eindrückbar, und bilden eine Aufreißlinie 28, um entlang dieser den Deckelscheibenabschnitt von der übrigen Deckelscheibe 5 zu trennen. Der vordere Linienabschnitt 30 verläuft im Wesentlichen konvex gekrümmt und ist entsprechend den Randnuten zugeordnet. Die Seitenlinienabschnitte verlaufen im Wesentlichen geradlinig, wobei zwischen deren dem vorderen Linienabschnitt zuweisenden Enden die mittlere Faltlinie verläuft. Dabei verläuft bei dem dargestellten Ausführungsbeispiel die mittlere Faltlinie im Wesentlichen parallel zur Endfaltlinie und ist länger als diese.

Zum Öffnen des Deckelscheibenabschnitts drückt der Benutzer mit einem Finger auf den Eindrückabschnitt 33, so dass dieser sich entlang des vorderen Linienabschnitts 30 von der übrigen Deckelscheibe 5 trennt. Ist dann der Eindrückabschnitt in Richtung eines Becherinneren um die mittlere Faltlinie verschwenkt, wird der Deckelscheibenabschnitt weiter entlang der Seitenlinienabschnitte 31, 32 von der Deckelscheibe 5 getrennt und gleichzeitig erfolgt ein Umklappen des Hochklappabschnitts nach oben, zusammen mit dem relativ zu diesem eingeklappten Eindrückabschnitt, um die Endfaltlinie 29. In der geöffneten Stellung des Deckelscheibenabschnitts steht dieser entlang der Endfaltlinie 29 nach oben von der Deckelscheibe ab, wobei der Eindrückabschnitt zumindest teilweise um die mittlere Faltlinie in Richtung Hochklappabschnitt eingeschwenkt ist. Dies kann ebenfalls bis zu einer Anlage von Eindrückabschnitt und Hochklappabschnitt erfolgen.

Es besteht die Möglichkeit, zumindest teilweise die Austrinkstelle durch den Deckelscheibenabschnitt wieder zu verschließen, indem im Wesentlichen die zum Öffnen beschriebenen Schritte in umgekehrter Weise durchgeführt werden. Dabei besteht die Möglichkeit, dass Eindrückabschnitt und Hochklappabschnitt im Wesentlichen wieder in der Ebene der Deckelscheibe 5 angeordnet sind, so dass zumindest ein gewisser Ausspritzschutz für im Becher enthaltene Flüssigkeit gegeben ist.

Durch den Deckel der vorliegenden Anmeldung ergibt sich ein flüssigkeitsdichter Deckel, der allen Anforderungen hinsichtlich Dichtigkeit und festem Sitz auf einem Becher genügt, so dass auch ein mit einem Getränk gefüllter Becher beispielsweise transportabel ist. Insbesondere ist der Deckel nur aus Materialien hergestellt, die ökologisch unbedenklicher als die Materialien bei vorbekannten Deckeln aus Kunststoffmaterial sind. Der Deckel ist so stabil, dass er ggf. auch mehrfach verwendbar ist und auch nach einem Lösen vom Becher wieder im Wesentlichen flüssigkeitsdicht auf diesen aufsetzbar ist.

Weiterhin sei angemerkt, dass das Deckelunterteil aus zwei, drei oder mehr spiralförmig gewickelten Papierschichten hergestellt ist, während die Deckelscheibe in der Regel nur aus einer Papierschicht gebildet ist. Allerdings ist ggf. auch die Deckelscheibe aus zwei oder mehr Schichten herstellbar.

## Patentansprüche

1. Deckel (1) für einen Becher (2) für Getränke aus einem ringförmigen, auf einen oberen Becherrand (3) aufsetzbaren Deckelunterteil (4) und einer im Wesentlichen kreisförmigen Deckelscheibe (5), wobei Deckelunterteil (4) und Deckelscheibe (5) aus Papier hergestellt und entlang einer nach unten in Richtung Becher weisenden Randnut (6, 7) und eines in entgegengesetzter Richtung nach oben weisenden Randflansch (9, 8), der in die Randnut (6, 7) eingesteckt ist, flüssigkeitsdicht verbunden sind, **dadurch gekennzeichnet, dass** das Deckelunterteil (4) aus zwei, drei oder mehr spiralförmig gewickelten Papierschichten gebildet ist und aus einer länglichen Röhre durch Zuschneiden in scheibenähnlicher Weise hergestellt wird.

2. Deckel nach Anspruch 1, wobei die Randnut (6) durch einen oberen Rand (10) des Deckelunterteils (4) und der Randflansch (8) durch einen nach oben umgefalteten Deckelscheibenrand (11) gebildet sind.

3. Deckel nach Anspruch 1, wobei die Randnut (7) durch einen nach unten offenen Randring (12) der Deckelscheibe (5) und der Randflansch (9) durch einen oberen Endabschnitt (13) des Deckelunterteils (4) gebildet sind.

4. Deckel nach einem der vorangehenden Ansprüche, wobei die Deckelscheibe (5) auf ihrer Unterseite (16) und/oder Oberseite eine im Wesentlichen flüssigkeitsdichte Beschichtung (17) aufweist.

5. Deckel nach einem der vorangehenden Ansprüche, wobei Randnut (6, 7) und Randflansch (8, 9) miteinander verklebt sind.

6. Deckel nach einem der vorangehenden Ansprüche, wobei das Deckelunterteil (4) zumindest einen nach innen vorspringenden Randwulst (22) aufweist.

7. Deckel nach einem der vorangehenden Ansprüche, wobei im Wesentlichen am unteren Ende (26) von Randnut (6) oder Randflansch (9) des Deckelunterteils (4) eine im Wesentlichen von unten nach oben betrachtet nach innen geneigte Auflagekante (27) gebildet ist.

8. Deckel nach einem der vorangehenden Ansprüche, wobei die Dicken der Papierschichten unterschiedlich sind.

9. Deckel nach einem der vorangehenden Ansprüche, wobei eine durch einen Benutzer zu öffnende Austrinkstelle (21) in der Deckelscheibe (5) ausgebildet ist.

10. Deckel nach einem Anspruch 9, wobei die Austrinkstelle (21) durch eine oder mehrere zumindest teilweise die Deckelscheibe (5) durchsetzende Schnittlinie bzw. Schnittlinien (25) gebildet ist.

11. Deckel nach Anspruch 9 oder 10, wobei die Austrinkstelle (21) eine Handhabe (23) zum Eindrücken oder Abheben eines Deckelscheibenabschnitts (24) zugeordnet ist.

12. Deckel nach einem der Ansprüche 9 bis 11, wobei ein die Austrinkstelle (21) verschließender Deckelscheibenabschnitt (24) von einer zumindest teilweise umlaufenden Aufreißlinie (28) und einer Endfaltlinie (29) begrenzt ist.

13. Deckel nach Anspruch 12, wobei die Aufreißlinie (28) einen vorderen, der Randnut (6, 7) zuweisenden Linienabschnitt (30) und zwei sich von dem vorderen Linienabschnitt in Richtung Endfaltlinie (29) verlaufende Seitenlinienabschnitte (31, 32) aufweist.

14. Deckel nach Anspruch 13, wobei der Deckelscheibenabschnitt (24) eine weitere mittlere Faltlinie (35) aufweist, die sich im Wesentlichen zwischen Enden der Seitenlinienabschnitte erstreckt, welche Enden mit dem vorderen Linienabschnitt verbunden sind, wobei die mittlere Faltlinie (35) im Wesentlichen parallel zur Endfaltlinie (29) verläuft.

15. Deckel nach einem der Ansprüche 1 bis 8, wobei der Deckel (1) eine Deckelscheibe (5) mit einem Deckelscheibenabschnitt (24)umfasst, wobei der Deckelscheibenabschnitt (24) eine Austrinkstelle (21) des Deckels (1) verschließt und von einer zumindest teilweise umlaufenden Aufreißlinie (28) und einer Endfaltlinie (29) begrenzt ist, wobei die Aufreißlinie (28) einen vorderen, der Randnut (6, 7) zuweisenden Linienabschnitt (30) und zwei sich von dem vorderen Linienabschnitt (30) in Richtung Endfaltlinie (29) verlaufende Seitenlinienabschnitte (31, 32) aufweist, wobei der Deckelscheibenabschnitt (24) eine weitere mittlere Faltlinie (35) aufweist, die sich im Wesentlichen zwischen Enden der Seitenlinienabschnitte (31, 32) erstreckt, welche Enden mit dem vorderen Linienabschnitt (30) verbunden sind, wobei die mittlere Faltlinie (35) im Wesentlichen parallel zur Endfaltlinie (29) verläuft.

## Claims

1. Lid (1) for a cup (2) for beverages, comprising an annular lower lid part (4), which can be placed on an upper cup rim (3), and a substantially circular lid disc (5), wherein the lower lid part (4) and the lid disc (5) are made of paper and are connected in a liquid-tight manner along a rim groove (6, 7) pointing downwards in the direction of the cup and a rim flange (9, 8) pointing upwards in the opposite direction, said rim flange being inserted into the rim groove (6, 7), **characterized in that** the lower lid part (4) is formed by two, three or more spirally wound paper layers and made from an elongated tube by cutting in a slice-like manner.

2. Lid according to claim 1, wherein the rim groove (6) is formed by an upper rim (10) of the lower lid part (4) and the rim flange (8) is formed by a lid disc rim (11) folded over upwards.

3. Lid according to claim 1, wherein the rim groove (7) is formed by a downwardly open rim ring (12) of the lid disc (5) and the rim flange (9) is formed by an upper end portion (13) of the lower lid part (4).

4. Lid according to one of the preceding claims, wherein the lid disc (5) has a substantially liquid-tight coating (17) on its lower side (16) and/or upper side.

5. Lid according to one of the preceding claims, wherein the rim groove (6, 7) and rim flange (8, 9) are glued together.

6. Lid according to one of the preceding claims, wherein the lower lid part (4) has at least one inwardly projecting locking bead (22).

7. Lid according to one of the preceding claims, wherein a substantially inwardly inclined supporting rim (27), when viewed from bottom to top, is formed substantially at the lower end (26) of the rim groove (6) or rim flange (9) of the lower lid part (4).

8. Lid according to one of the preceding claims, wherein the thickness of the paper layers is different.

9. Lid according to one of the preceding claims, wherein a drinking opening (21), which can be opened by a user, is formed in the lid disc (5).

10. Lid according to claim 9, wherein the drinking opening (21) is formed by one or more cut lines (25) at least partially passing through the lid disc (5).

11. Lid according to claim 9 or 10, wherein a handle (23) for pressing in or lifting off a lid disc section (24) is associated with the drinking opening (21).

12. Lid according to one of claims 9 to 11, wherein a lid disc section (24) closing the drinking opening (21) is bounded by an at least partially circumferential tear line (28) and an end fold line (29).

13. Lid according to claim 12, wherein the tear line (28) comprises a front line section (30) facing the rim groove (6, 7) and two side line sections (31, 32) extending from the front line section (30) in the direction of the end fold line (29).

14. Lid according to claim 13, wherein the lid disc section (24) comprises a further middle fold line (35) extending substantially between ends of the side line sections, which ends are connected to the front line section, wherein the middle fold line (35) extends substantially parallel to the end fold line (29).

15. Lid according to one of claims 1 to 8, wherein the lid (1) comprises a lid disc (5) with a lid disc section (24), wherein the lid disc section (24) closes a drinking opening (21) of the lid (1) and is bounded by an at least partially circumferential tear line (28) and an end fold line (29), wherein the tear line (28) comprises a front line section (30) facing the rim groove (6, 7) and two side line sections (31, 32) extending from the front line section (30) in the direction of the end fold line (29), wherein the lid disc section (24) comprises a further middle fold line (35) extending substantially between ends of the side line sections, which ends are connected to the front line section, wherein the middle fold line (35) extends substantially parallel to the end fold line (29).

## Revendications

1. Couvercle (1) pour un gobelet (2) destiné à des boissons, comprenant une partie inférieure annulaire du couvercle (4) pouvant être placée sur un rebord supérieur (3) du gobelet, et un disque de couvercle (5) sensiblement circulaire, la partie inférieure du couvercle (4) et le disque de couvercle (5) étant réalisés en papier et reliés de manière étanche aux liquides le long d'une rainure de bord (6, 7) orientée vers le bas en direction du gobelet et d'une bride de bord (9, 8) orientée vers le haut dans la direction opposée, ladite bride de bord étant insérée dans la rainure de bord (6, 7), **caractérisé en ce que** la partie inférieure du couvercle (4) est formée de deux, trois ou plusieurs couches de papier enroulées en spirale et est obtenue à partir d'un tube allongé par découpage en tranches.

2. Couvercle selon la revendication 1, dans lequel la rainure de bord (6) est formée par un bord supérieur (10) de la partie inférieure du couvercle (4) et la bride de bord (8) est formée par un bord du disque de couvercle (11) replié vers le haut.

3. Couvercle selon la revendication 1, dans lequel la rainure de bord (7) est formée par un anneau de bord (12) du disque de couvercle (5), ouvert vers le bas et la bride de bord (9) est formée par une partie d'extrémité supérieure (13) de la partie inférieure du couvercle (4).

4. Couvercle selon l'une des revendications précédentes, dans lequel le disque de couvercle (5) comporte un revêtement (17) sensiblement étanche aux liquides sur sa face inférieure (16) et/ou sa face supérieure.

5. Couvercle selon l'une des revendications précédentes, dans lequel la rainure de bord (6, 7) et la bride de bord (8, 9) sont collées l'une à l'autre.

6. Couvercle selon l'une des revendications précédentes, dans lequel la partie inférieure du couvercle (4) comporte au moins un bourrelet de bord (22) faisant saillie vers l'intérieur.

7. Couvercle selon l'une des revendications précédentes, dans lequel un bord d'appui (27) sensiblement incliné vers l'intérieur, vu de bas en haut, est formé sensiblement à l'extrémité inférieure (26) de la rainure de bord (6) ou de la bride de bord (9) de la partie inférieure du couvercle (4).

8. Couvercle selon l'une des revendications précédentes, dans lequel les épaisseurs des couches de papier sont différentes.

9. Couvercle selon l'une des revendications précédentes, dans lequel une ouverture pour boire (21), pouvant être ouverte par un utilisateur, est formée dans le disque de couvercle (5).

10. Couvercle selon la revendication 9, dans lequel l'ouverture pour boire (21) est formée par une ou plusieurs lignes de découpe (25) traversant au moins partiellement le disque de couvercle (5).

11. Couvercle selon la revendication 9 ou 10, dans lequel un élément de préhension (23) destiné à enfoncer ou à soulever une section du disque de couvercle (24) est associé à l'ouverture pour boire (21).

12. Couvercle selon l'une des revendications 9 à 11, dans lequel une section du disque de couvercle (24) fermant l'ouverture pour boire (21) est délimitée par une ligne de déchirure (28) au moins partiellement circonférentielle et une ligne de pliage d'extrémité (29).

13. Couvercle selon la revendication 12, dans lequel la ligne de déchirure (28) comprend un tronçon de ligne avant (30) tourné vers la rainure de bord (6, 7) et deux tronçons de ligne latéraux (31, 32) s'étendant à partir du tronçon de ligne avant (30) en direction de la ligne de pliage d'extrémité (29).

14. Couvercle selon la revendication 13, dans lequel la section du disque de couvercle (24) comprend une autre ligne de pliage médiane (35) s'étendant sensiblement entre les extrémités des tronçons de ligne latéraux, lesquelles extrémités sont reliées au tronçon de ligne avant, la ligne de pliage médiane (35) s'étendant sensiblement parallèlement à la ligne de pliage d'extrémité (29).

15. Couvercle selon l'une des revendications 1 à 8, dans lequel le couvercle (1) comprend un disque de couvercle (5) comportant une section du disque de couvercle (24), ladite section du disque de couvercle (24) fermant une ouverture pour boire (21) du couvercle (1) et étant délimitée par une ligne de déchirure (28) au moins partiellement circonférentielle et une ligne de pliage d'extrémité (29), la ligne de déchirure (28) comprenant un tronçon de ligne avant (30) tourné vers la rainure de bord (6, 7) et deux tronçons de ligne latéraux (31, 32) s'étendant à partir du tronçon de ligne avant (30) en direction de la ligne de pliage d'extrémité (29), la section du disque de couvercle (24) comportant une autre ligne de pliage médiane (35) s'étendant sensiblement entre les extrémités des tronçons de ligne latéraux (31, 32), lesquelles extrémités sont reliées au tronçon de ligne avant (30), la ligne de pliage médiane (35) s'étendant sensiblement parallèlement à la ligne de pliage d'extrémité (29).
